# FASCICULE DE BREVET EUROPEEN

(11) **EP 0 720 272 B1**
(45) Date de publication et mention de la délivrance du brevet: **10.06.1998**
(21) Numéro de dépôt: 95402907.0
(22) Date de dépôt: 21.12.1995
(51) Int. Cl.: H02K 7/09

(54) **Ensemble tournant comportant notamment des moyens de sustentation radiaux et une butée axiale magnétique**
Drehende Einrichtung mit magnetischem axialem Drucklager und Mitteln zum radialen Schweben
Rotating device having an axial magnetical thrust bearing and radial levitating means

(30) Priorité: 26.12.1994 FR 9415647
(43) Date de publication de la demande: 03.07.1996
(73) Titulaire: ALCATEL ALSTHOM COMPAGNIE GENERALE D'ELECTRICITE, 75008 Paris (FR)
(72) Inventeur: Delamare, Jerome, F-74009 Annecy Cedex (FR); Yonnet, Jean-Paul, F-38240 Meylan (FR); Perillat-Amede, Denis, F-74009 Annecy Cedex (FR)
(74) Mandataire: Gosse, Michel

(56) Documents cités:
- EP-A- 0 470 637
- EP-A- 0 664 410
- WO-A-84/01802
- DE-A- 4 240 718
- FR-A- 2 110 581
- US-A- 3 694 041

## Description

La présente invention concerne un ensemble tournant comportant un stator et un rotor d'axe Δ, des moyens moteurs d'entraînement en rotation, des moyens de sustentation radiaux et une butée axiale magnétique active comprenant un circuit magnétique en deux parties dont l'une est fixe et liée audit stator et l'autre mobile et liée audit rotor et séparées l'une de l'autre par deux entrefers plans parallèles, chaque partie dudit circuit magnétique étant de révolution, d'axe Δ, et dont la forme est celle qui résulte de la rotation autour dudit axe Δ d'un profil ouvert en forme de U, les extrémités de chaque partie du circuit magnétique formant deux surfaces planes constituant deux couronnes circulaires et concentriques centrées sur l'axe Δ et perpendiculaires à cet axe, les extrémités ouvertes des deux parties de circuit magnétique se faisant face, une bobine électrique de butée axiale étant logée dans l'espace annulaire interne de la partie fixe dudit circuit magnétique.

Le document EP-A-0664410, publié le 26 juillet 1995, décrit un tel ensemble tournant.

L'invention s'applique, en particulier, aux pompes à vide telles que les pompes turbomoléculaires à ailettes ou du type Holweck.

Elle a pour objet la réduction de l'encombrement de l'ensemble, la simplification du montage, la réduction des coûts.

L'invention a ainsi pour objet un ensemble tournant tel que défini ci-dessus, un bobinage statorique moteur, lié à ladite bobine de butée axiale et logé dans l'espace annulaire interne de la partie mobile dudit circuit magnétique coopèrant avec des aimants permanents fixés à la partie mobile dudit circuit magnétique en regard dudit bobinage statorique moteur.

Selon une réalisation particulière, ledit bobinage statorique moteur est un bobinage monophasé à quatre bobines formant deux paires de pôles d'axes perpendiculaires à l'axe Δ, alimenté en courant alternatif par un onduleur autocommuté par une cellule à effet Hall détectant la position angulaire du rotor.

Selon une autre caractéristique, et afin d'assurer le calage angulaire du rotor à l'arrêt pour imposer le couple maximal au démarrage et le sens de rotation, un aimant permanent est placé au centre d'au moins une bobine dudit bobinage statorique moteur, la polarité dudit aimant étant tangentielle.

On va maintenant donner la description d'un exemple particulier de mise en oeuvre de l'invention en se référant aux dessins annexés dans lesquels :

La figure 1 représente une pompe turbomoléculaire constituant une application particulière d'un ensemble tournant selon l'invention.

La figure 2 représente, extrait de la figue 1, les moyens moteurs d'entraînement en rotation et la butée axiale active, de l'ensemble tournant, en coupe selon II-II de la figure 3.

La figure 3 est une coupe selon III-III de la figure 2 montrant la position à l'arrêt.

La figure 4 est la même que la figure 3 mais au moment du démarrage avec indication de la polarité des bobines du bobinage statorique à ce moment et indication du sens de rotation.

La figure 5 montre la position de la partie rotorique au moment de la commutation du sens du courant dans le bobinage et donc du sens de polarité des bobines du bobinage.

La figure 6 représente une schéma bloc simplifié de l'alimentation du bobinage statorique moteur.

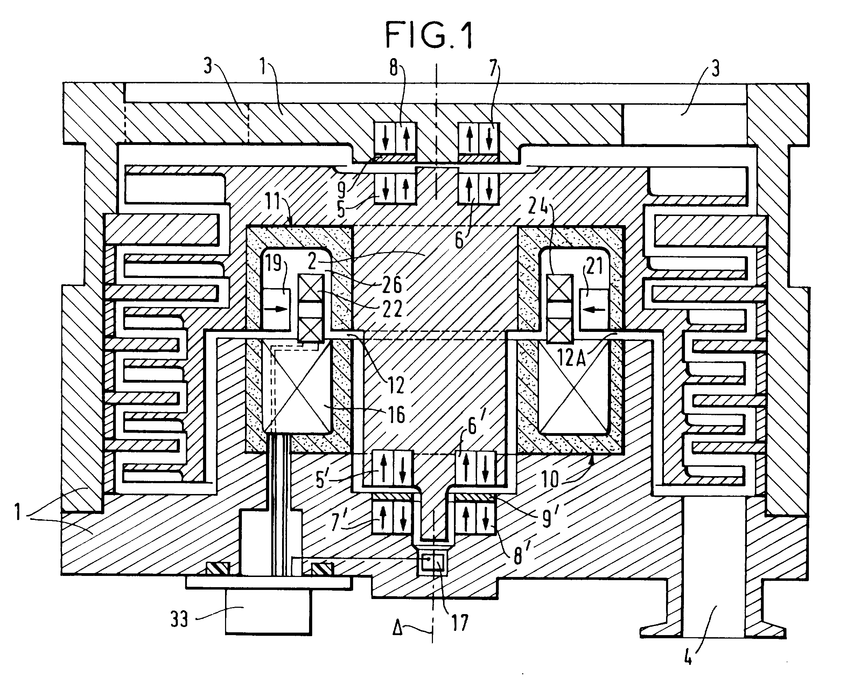

La figure 1 représente donc une application particulière de l'invention. Il s'agit ici d'une pompe turbomoléculaire.

La pompe comprend un stator 1 et un rotor 2 d'axe Δ. Le stator comprend une pluralité d'orifices d'aspiration 3 et un orifice de refoulement 4.

Le rotor est entraîné en rotation par un moteur synchrone à aimants permanents et il est suspendu magnétiquement au moyen d'une butée axiale magnétique active et de deux paliers radiaux décalés le long de l'axe Δ. Il s'agit de deux centreurs magnétiques passifs montés en attraction comprenant chacun deux bagues annulaires aimantées axialement en sens inverse 5 et 6 (5' et 6') sur le rotor et deux bagues annulaires aimantés axialement en sens inverse 7 et 8 (7' et 8') sur le stator. Chaque centreur magnétique passif comporte en outre, sur la partie statorique, un amortisseur passif à courants de Foucault. Il s'agit par exemple d'une rondelle de cuivre, respectivement 9 et 9'.

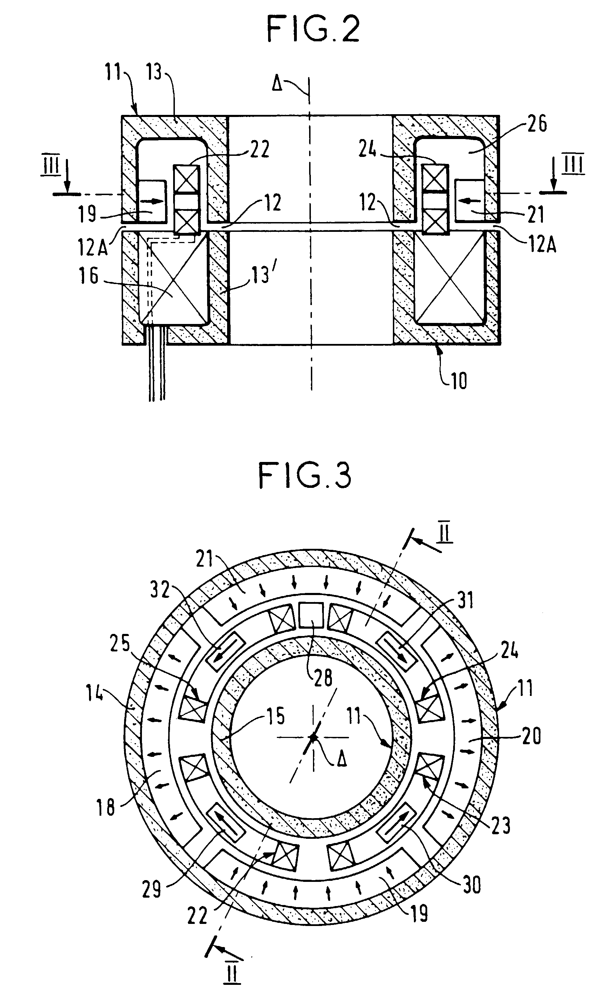

On va maintenant décrire en se référant plus particulièrement aux figures 2 et 3 le moteur d'entraînement en rotation et la butée magnétique axiale active combinée qui sont le propre de l'invention par leur combinaison permettant une diminution de l'encombrement et du coût.

La butée magnétique axiale active comprend un circuit magnétique en deux parties 10 et 11, séparées l'une de l'autre par deux entrefers 12 et 12A.

Comme on le voit sur la figure 1, la partie 10 est liée au stator et donc fixe et la partie 11 est liée au rotor et donc mobile.

Les entrefers 12 et 12A sont plans et parallèles mais pas nécessairement dans le même plan ni de la même valeur.

Chacune des deux parties 10 et 11 du circuit magnétique est de révolution, d'axe Δ et sa forme est celle qui résulte de la rotation autour de l'axe Δ d'un profil 13 (13') ouvert en forme de U. Les extrémités ouvertes des deux parties 10 et 11 du circuit magnétique se font face et ces extrémités forment, pour chaque partie une surface plane constituant deux couronnes circulaires coplanaires et concentriques centrées sur l'axe Δ et perpendiculaires à cet axe. Ces deux couronnes sont identiques aux couronnes repérées 14 et 15 sur la figure 3 et correspondant au plan de coupe repéré III-III sur la figure 2. A l'intérieur de l'espace annulaire interne de la partie statorique 10 du circuit magnétique est logée une bobine électrique 16 de butée axiale.

Pour commander l'intensité du courant dans cette bobine électrique, on utilise l'information fournie par un détecteur de position axiale 17 disposé sur le stator (voir figure 1).

Comme la butée axiale est attractive, on s'arrange pour que le zéro de position du rotor dans le stator soit décalé vers le haut de façon à créer une attraction du rotor vers le haut par le palier supérieur 5, 6, 7, 8. Le courant dans la bobine 16 de butée axiale provoquant une attraction vers le bas équilibrant cette attraction vers le haut.

Le moteur d'entraînement en rotation comporte un circuit magnétique rotorique, il s'agit de la partie mobile 11 du circuit magnétique précédemment décrit. Ainsi le moteur d'entraînement utilise une partie du circuit magnétique de la butée axiale active.

Ce moteur est un moteur synchrone à aimants permanents. Dans l'exemple décrit on a quatre aimants permanents 18, 19, 20 et 21 fixés à cette partie mobile 21 du circuit magnétique à l'intérieur de l'espace annulaire interne 26 de cette partie de circuit magnétique. Le moteur comprend en outre un bobinage statorique monophasé à quatre bobines 22, 23, 24 et 25 montées en série de façon à former deux paires de pôles. Ces bobines sont situées dans l'espace annulaire interne 26 de la partie mobile 11 du circuit magnétique, en regard des aimants 18 à 21 et coopérant avec eux. L'axe des bobines 22 à 25 est perpendiculaire à l'axe Δ. L'ensemble des bobines 22 à 25 du moteur et de la bobine 16 de la butée axiale est noyée dans une résine. Ainsi l'ensemble forme un bloc rigide.

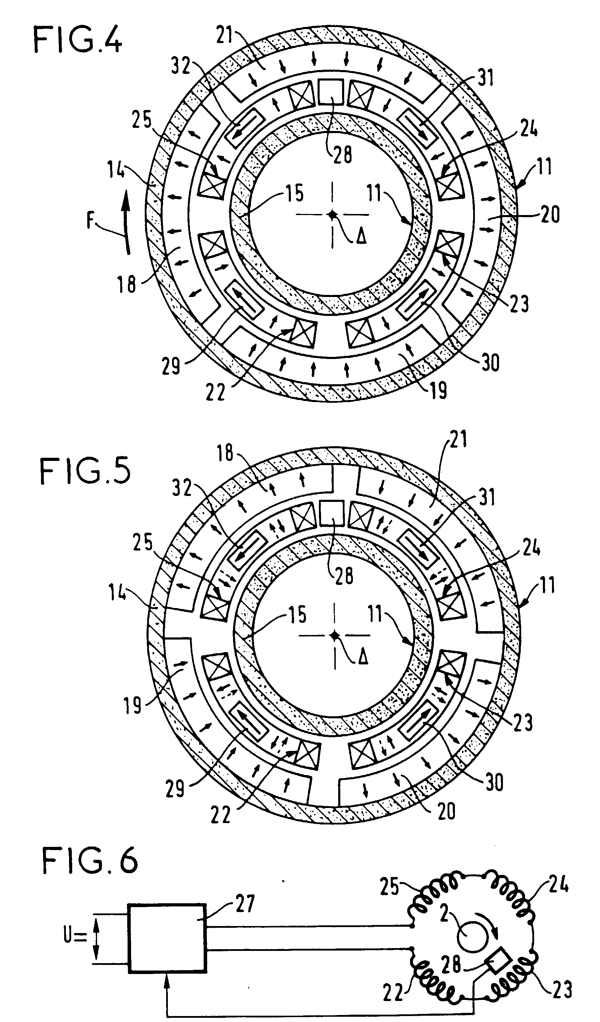

Ce bobinage, constitué des quatre bobines 22 à 25 est alimenté en courant alternatif par un onduleur 27 (figure 6) autocommuté par un capteur à effet Hall 28 détectant la position angulaire du rotor.

La vitesse de rotation du moteur est déterminée par la tension continue U d'alimentation de l'onduleur 27 qui peut être fixe ou variable selon que l'on souhaite une vitesse de rotation fixe ou variable.

Comme on le voit sur la figure 3, le capteur à effet Hall 28 est placé entre deux bobines du bobinage statorique. Dans l'exemple, entre les bobines 24 et 25.

Enfin, pour fixer le sens de rotation de la machine au démarrage avec un couple maximal, le rotor est calé angulairement à l'arrêt par le moyen de petits aimants permanents 29, 30, 31 et 32 placés chacun et respectivement au centre d'une bobine 22, 23, 24 et 25. Leur aimantation est tangentielle comme l'indique les flèches. A noter que sur toutes les figures les flèches indiquent le sens de la polarité des aimants permanents ou des bobines (figure 4) sauf la flèche F de la figure 4 qui indique le sens de rotation.

On a placé quatre aimants permanents 29, 30, 31 et 32 pour fixer angulairement le rotor à l'arrêt. Cependant un seul est nécessaire pour fixer cette position.

L'emploi de quatre aimants a pour but d'équilibrer l'ensemble en annulant les efforts radiaux de décentrement du rotor.

Sur la figure 3, on a représenté le rotor dans sa position angulaire à l'arrêt. Les bobines 22 à 25 ne sont donc pas alimentées.

Sur la figure 4 on est dans la même position mais au moment du démarrage, les bobines 22 à 25 sont alimentées de telle sorte que les polarités sont celles indiquées par les flèches et il en résulte le démarrage dans le sens de rotation indiquée par la flèche F.

Enfin, sur la figure 5, on veut seulement montrer la position du rotor au moment de la commutation dans les bobines, commandée par l'information fournie par le capteur à effet Hall 28 détectant une inversion de polarité du champ magnétique lorsqu'arrive devant lui l'aimant 18.

Ainsi, grâce à la disposition combinée du moteur et de la butée axiale, on arrive à obtenir une réduction appréciable du volume. Le montage est très simple et le coût réduit. Il n'y a en outre aucune interaction radiale entre le rotor et le stator puisque les bobines 22 à 25 sont dans l'air, sans fer.

A la partie inférieure de la pompe est situé un connecteur électrique 33 pour les alimentations électriques.

## Revendications

1. Ensemble tournant comportant un stator (1) et un rotor (2) d'axe Δ, des moyens moteurs d'entraînement en rotation, des moyens de sustentation radiaux et une butée axiale magnétique active comprenant un circuit magnétique en deux parties dont l'une (10) est fixe et liée audit stator (1) et l'autre (11) mobile et liée audit rotor (2) et séparées l'une de l'autre par deux entrefers plans parallèles (12, 12A) chaque partie dudit circuit magnétique étant de révolution, d'axe Δ, et dont la forme est celle qui résulte de la rotation autour dudit axe Δ d'un profil (13) ouvert en forme de U, les extrémités de chaque partie du circuit magnétique formant deux surfaces planes constituant deux couronnes circulaires (14, 15) concentriques centrées sur l'axe Δ et perpendiculaires à cet axe, les extrémités ouvertes des deux parties de circuit magnétique se faisant face, une bobine électrique (16) de butée axiale étant logée dans l'espace annulaire interne de la partie fixe (10) dudit circuit magnétique, un bobinage statorique moteur, lié à ladite bobine (16) de butée axiale et logé dans l'espace annulaire interne (26) de la partie mobile (11) dudit circuit magnétique coopèrant avec des aimants permanents (18 à 21) fixés à la partie mobile (11) dudit circuit magnétique en regard dudit bobinage statorique moteur.

2. Ensemble tournant selon la revendication 1 caractérisé en ce que ledit bobinage statorique moteur est un bobinage monophasé, à quatre bobines (22 à 25) formant deux paires de pôles d'axes perpendiculaires à l'axe Δ, alimenté en courant alternatif par un onduleur (27) autocommuté par une cellule à effet Hall (28) détectant la position angulaire du rotor.

3. Ensemble tournant selon la revendication 2, caractérisé en ce que ledit capteur à effet Hall (28) est situé entre deux pôles consécutifs (24, 25) dudit bobinage.

4. Ensemble tournant selon l'une des revendications 2 ou 3, caractérisé en ce qu'un aimant permanent (29, 30, 31, 32) est placé au centre d'au moins une bobine dudit bobinage, la polarité dudit aimant étant tangentielle.

5. Ensemble tournant selon l'une des revendications 1 à 4, caractérisé en ce que lesdits moyens de sustentation radiaux comprennent deux centreurs magnétiques passifs (5 à 8 et 5' à 8') axialement décalés le long de l'axe Δ.

6. Ensemble tournant selon l'une des revendications 1 à 5, caractérisé en ce que le courant dans ladite bobine (16) de butée axiale est commandée à partir d'une information fournie par un détecteur (17) de position axiale.

7. Ensemble tournant selon l'une des revendications 1 à 6, caractérisé en ce que ledit stator et ledit rotor sont un stator et un rotor de pompe à vide.

## Patentansprüche

1. Drehende Einrichtung, die einen Stator (1) und einen Rotor (2) mit einer Achse Δ, bewegende Mittel für den Drehantrieb, Mittel zum radialen Schweben und ein aktives, magnetisches, axiales Drucklager aufweist, das einen magnetischen Kreis aus zwei Teilen umfasst, wovon der eine (10) fest und mit dem Stator (1) verbunden ist und der andere (11) beweglich und mit dem Rotor (2) verbunden ist und die durch zwei parallele, ebene Luftspalte (12, 12A) voneinander getrennt sind, wobei jeder Teil des magnetischen Kreises einen Umlauf mit der Achse Δ hat und dessen Form diejenige ist, die sich aus der Rotation eines offenen Profils (13) in U-Form um die Achse Δ ergibt, wobei die Enden jedes Teils des magnetischen Kreises zwei ebene Flächen bilden, die zwei konzentrische, kreisförmige Kränze (14, 15) bilden, die auf die Achse A zentriert und zu dieser Achse senkrecht sind, wobei die offenen Enden der beiden Teile des magnetischen Kreises eine Vorderseite bilden, wobei eine elektrische Spule (16) für ein axiales Drucklager im inneren ringförmigen Raum des festen Teils (10) des magnetischen Kreises untergebracht ist, wobei eine bewegende Statorwicklung, die mit der Spule (16) für das axiale Drucklager verbunden und im inneren, ringförmigen Raum (26) des beweglichen Teils (11) des magnetischen Kreises untergebracht ist, mit Permanentmagneten (18 bis 21) zusammenwirkt, die am beweglichen Teil (11) des magnetischen Kreises gegenüber der bewegenden Statorwicklung befestigt sind.

2. Drehende Einrichtung nach Anspruch 1, dadurch gekennzeichnet, dass die bewegende Statorwicklung eine einphasige Wicklung mit vier Spulen (22 bis 25) ist, die zwei Polpaare mit zur Achse Δ senkrechten Achsen bilden, die von einem Wechselrichter (27), der von einer die Winkelstellung des Rotors erfassenden Halleffekt-Zelle (28) automatisch umgeschaltet wird, mit Wechselstrom versorgt wird.

3. Drehende Einrichtung nach Anspruch 2, dadurch gekennzeichnet, dass sich der Halleffekt-Messfühler (28) zwischen zwei aufeinanderfolgenden Polen (24, 25) der Wicklung befindet.

4. Drehende Einrichtung nach einem der Ansprüche 2 oder 3, dadurch gekennzeichnet, dass ein Permanenzmagnet (29, 30, 31, 32) im Zentrum wenigstens einer Spule der Wicklung angeordnet ist, wobei die Polarität des Magneten tangential ist.

5. Drehende Einrichtung nach einem der Ansprüche 1 bis 4, dadurch gekennzeichnet, dass die Mittel zum radialen Schweben zwei passive Zentriermagnete (5 bis 8 und 5' bis 8') umfassen, die entlang der Achse Δ axial versetzt sind.

6. Drehende Einrichtung nach einem der Ansprüche 1 bis 5, dadurch gekennzeichnet, dass der Strom in der Spule (16) für das axiale Drucklager ausgehend von einer Information gesteuert wird, die von einem Detektor (17) für die axiale Stellung geliefert wird.

7. Drehende Einrichtung nach einem der Ansprüche 1 bis 6, dadurch gekennzeichnet, dass der Stator und der Rotor ein Stator und ein Rotor für eine Vakuumpumpe sind.

## Claims

1. A rotary assembly comprising a stator (1) and a rotor (2) of axis Δ, rotary drive means, radial support means, and an active magnetic axial abutment comprising a magnetic circuit in two portions, namely a fixed portion (10) secured to the stator (1), and a moving portion (11) secured to the rotor (2), the two portions being separated from each other by two parallel plane air gaps (12, 12A), each portion of said magnetic circuit being circularly symmetrical about axis Δ, and having the shape of an open channel-section (13) extending about said axis Δ, the ends of each portion of the magnetic circuit forming two plane surfaces constituting two concentric circular bands (14, 15) centered on the axis Δ, and perpendicular thereto, the open ends of the two portions of magnetic circuit facing each other, an electrical axial abutment coil (16) being received in the inside annular space of the fixed portion (10) of said magnetic circuit, a stator drive winding secured to said axial abutment coil (16) and received in the inside annular space (26) of the moving portion (11) of said magnetic circuit co-operating with permanent magnets (18 to 21) fixed to the moving portion (11) of said magnetic circuit, and facing said stator drive winding.

2. A rotary assembly according to claim 1, characterized in that said stator drive winding is a single-phase winding having four coils (22 to 25) forming two pairs of poles having axes perpendicular to axis Δ, which winding is fed with alternating current by an inverter (27) automatically commutated by a Hall-effect cell (28) detecting the angular position of the rotor.

3. A rotary assembly according to claim 2, characterized in that said Hall-effect sensor (28) is situated between two consecutive poles (24, 25) of said winding.

4. A rotary assembly according to claim 2 or 3, characterized in that a permanent magnet (29, 30, 31, 32) is placed at the center of at least one coil of said winding, the polarity of said magnet being tangential.

5. A rotary assembly according to any one of claims 1 to 4, characterized in that said radial support means comprise two passive magnetic centering devices (5 to 8 and 5' to 8') offset axially from each other along axis Δ.

6. A rotary assembly according to any one of claims 1 to 5, characterized in that the current flowing through said axial abutment coil (16) is controlled on the basis of information supplied by an axial position detector (17).

7. A rotary assembly according to any one of claims 1 to 6, characterized in that said stator and said rotor are the stator and the rotor of a vacuum pump.
